(19) Europäisches Patentamt
European Patent Office
Office européen des brevets

(11) Publication number: **0 098 109**
**B1**

(12) **EUROPEAN PATENT SPECIFICATION**

(45) Date of publication of patent specification: **21.10.87**

(21) Application number: **83303635.3**

(22) Date of filing: **23.06.83**

(51) Int. Cl.[4]: **C 07 F 9/40,** C 08 K 5/53, C 08 L 23/12, C 07 C 69/54, C 07 C 69/73, C 09 K 15/32

(54) **Phosphorus-containing compounds, their production and their use as anti-oxidants.**

(30) Priority: **23.06.82 JP 108714/82**
**14.03.83 JP 42868/83**

(43) Date of publication of application:
**11.01.84 Bulletin 84/02**

(45) Publication of the grant of the patent:
**21.10.87 Bulletin 87/43**

(84) Designated Contracting States:
**CH DE FR GB IT LI NL**

(56) References cited:
**DD-B- 129 959**
**DE-A-1 933 657**
**US-A-4 192 796**

**Chemical Abstracts vol. 89, no. 1, 10 July 1978, Columbus, Ohio, USA; D. RADIC et al. "Copolymerization of aromatic methacrylates with vinylpyrrolidone", page 6, column 2, abstract no. 6650w**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Takahashi, Yukoh**
**11-8-208, Sone Higashimachi 2-chome**
**Toyonaka Osaka-fu (JP)**
Inventor: **Yachigo, Shinichi**
**11-7-305, Sone Higashimachi 2-chome**
**Toyonaka Osaka-fu (JP)**
Inventor: **Ishii, Tamaki**
**12-2 Uchihonmachi 1-chome**
**Suita Osaka-fu (JP)**

(74) Representative: **Geering, Keith Edwin et al**
**REDDIE & GROSE 16 Theobalds Road**
**London WC1X 8PL (GB)**

(56) References cited:
**Chemical Abstracts vol. 81, no. 11, 16 September 1974, Columbus, Ohio, USA; J. RACHON et al. "Aminophosphonic acids. 2. Hofmann degradation of carboxamides. A new method for the preparation of alpha-aminophosphonic acids", page 484, column 2, abstract no. 63728m**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 098 109 B1**

Courier Press, Leamington Spa, England.

**Description**

The present invention relates to novel phosphorus-containing compounds, their production and their use as antioxidants.

Many organic substances are subject to deterioration by heat, light and oxygen, e.g. synthetic resins such as polyolefins, ABS resins, polystyrene, high impact polystyrene, polyamides, polyacetals, acrylonitrile/styrene and ethylene/propylene copolymers; natural rubbers, synthetic rubbers such as butadiene, isoprene, isoprene/isobutylene, styrene/butadiene, acrylonitrile/butadiene and ethylene/propylene rubbers; petroleum products such as lubricating and fuel oils; and other oils, fats and greases.

Polyolefin resins such as polyethylene and polypropylene have excellent physical, chemical and electrical properties, and are formed into molded products, pipes, sheets and films by various methods such as blow molding, extrusion molding, injection molding, and calendering for use in many fields. However polyolefin resins, when used alone, deteriorate on processing or use, by the action of heat, light, or oxygen, with a remarkable reduction in physical properties as shown by phenomena such as softening, embrittlement or discoloration.

The use of anti-oxidants in an effort to prevent such phenomena is well known. Such antioxidants include for example phosphorus-containing antioxidants such as distearyl pentaerythritol diphosphite, tris(2,4-di-tert-butylphenyl)phosphite, tris(2-tert-butyl-4-methylphenyl) phosphite, bis(2,4-di-tert-butylphenyl)pentaerythritol diphosphite, tetrakis(2,4-di-tert-butylphenyl)4,4′-biphenylene diphosphite; phenolic-type antioxidants such as 2,6-di-tert-butyl-4-methylphenol, n-octadecyl β-(3,5-di-tert-butyl-4-hydroxyphenyl)propionate, tetrakis[methylene-3-(3,5-di-tert-butyl-4-hydroxyphenyl)propionate]methane, 1,3,5-trimethyl-2,4,6-tris(3,5-di-tert-butyl-4-hydroxybenzyl)benzene, 1,1,3-tris(2-methyl-4-hydroxy-5-tert-butylphenyl)butane, tris(2,6-dimethyl-4-tert-butyl-3-hydroxybenzyl)isocyanurate; and sulfur-containing antioxidants such as dilauryl thiodipropionate, dimyristyl thiodipropionate, distearyl thiodipropionate, pentaerythritol tetrakis(β-dodecylthiopropionate). However, these known compounds have the defect that their effect is short-lived; it is for example, insufficient to prevent deterioration of polyolefins by heat and oxidation and in particular to prevent discoloration.

The present invention provides phosphorus-containing compounds represented by the formula (I);

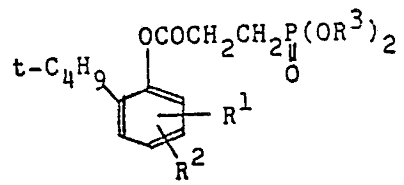

(I)

wherein $R^1$ and $R^2$ are selected from H and lower alkyl groups and $R^3$ is a lower alkyl or phenyl group. These compounds are useful for reducing or preventing the above-mentioned deterioration of substances, including polyolefins.

Compound (I) can be produced by reacting a phenyl acrylate represented by the formula (II):

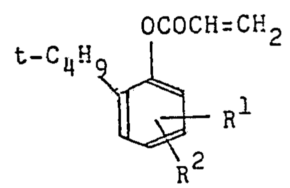

(II)

wherein $R^1$ and $R^2$ are as defined above, with a disubstituted phosphonate represented by the formula (III):

$$\underset{\overset{\|}{O}}{HP}(OR^3)_2 \qquad \text{(III)}$$

wherein $R^3$ is as defined above.

Lower alkyl groups herein include for example, methyl, ethyl, n-propyl, isopropyl, n-butyl, and tert-butyl.

The compounds (II) are novel and can be produced, for example, by reacting 2-tert-butyl-4-methylphenol, 2-tert-butyl-6-methylphenol, 2-tert-butyl-5-methylphenol, 2-tert-butyl-4,6-dimethylphenol or the like with acryloyl chloride in an inert solvent (e.g. toluene) in the presence of a dehydrochlorinating agent such as triethylamine or pyridine. The disubstituted phosphonates of formula (III) are well-known compounds; they include for example dimethyl phosphonate, diethyl phosphonate, di-n-propyl phosphonate, diisopropyl phosphonate, di-n-butyl phosphonate, and diphenyl phosphonate.

This reaction between phenyl acrylate and the disubstituted phosphonate is usually carried out in a solvent and is generally conducted in the presence of a basic catalyst. Suitable solvents include alcohols (e.g. methanol, ethanol, tert-butyl alcohol), ethers (e.g. ethylene glycol dimethyl ether, dioxane, tetrahydrofuran), and halogenated hydrocarbons (e.g. dichloromethane, chloroform). Of these, chloroform is particularly preferred.

Suitable basic catalysts include alkali metal hydroxides (e.g. sodium or potassium hydroxide), alkali metal alkoxides (e.g. sodium methoxide or ethoxide, potassium tert-butoxide), tertiary amines (e.g. triethylamine), and benzyltrimethylammonium hydroxide. Of these, sodium methoxide is particularly preferred. The amount of catalyst used may for example be from 0.01 to 20 mole %, preferably 0.1 to 10 mole %, based on the phenyl acrylate.

The reaction temperature may be from 0°C to the refluxing temperature of the solvent used, but is generally the refluxing temperature.

The molar ratio of phenyl acrylate to the disubstituted phosphonate is generally about unit, e.g. from 0.9:1 to 1.1:1.

In one method of separating the product after completion of the reaction, the reaction solution is cooled to about 40°C or less, the basic catalyst is neutralized with acid, and after washing the solution with water, the solvent is removed from the organic layer by evaporation. By this method, a product having a purity of not less than 95% can be obtained, but the product may be purified, e.g. by recrystallization, if necessary.

Examples of phosphorus-containing compounds (I) of the present invention thus produced are:

Dimethyl 2-(2-tert-butyl-4-methylphenoxycarbonyl)ethyl phosphonate,
dimethyl 2-(2-tert-butyl-5-methylphenoxycarbonyl)ethyl phosphonate,
dimethyl 2-(2-tert-butyl-4,6-dimethylphenoxycarbonyl)ethyl phosphonate,
diethyl 2-(2-tert-butyl-4-methylphenoxycarbonyl)ethyl phosphonate,
diethyl 2-(2-tert-butyl-5-methylphenoxycarbonyl)ethyl phosphonate,
diethyl 2-(2-tert-butyl-4,6-dimethylphenoxycarbonyl)ethyl phosphonate,
dipropyl 2-(2-tert-butyl-4-methylphenoxycarbonyl)ethyl phosphonate,
dipropyl 2-(2-tert-butyl-5-methylphenoxycarbonyl)ethyl phosphonate,
dipropyl 2-(2-tert-butyl-4,6-dimethylphenoxycarbonyl)ethyl phosphonate,
diisopropyl 2-(2-tert-butyl-4-methylphenoxycarbonyl)ethyl phosphonate,
diisopropyl 2-(2-tert-butyl-5-methylphenoxycarbonyl)ethyl phosphonate,
diisopropyl 2-(2-tert-butyl-4,6-dimethylphenoxycarbonyl)ethyl phosphonate,
dibutyl 2-(2-tert-butyl-4-methylphenoxycarbonyl)ethyl phosphonate,
dibutyl 2-(2-tert-butyl-5-methylphenoxycarbonyl)ethyl phosphonate,
dibutyl 2-(2-tert-butyl-4,6-methylphenoxycarbonyl)ethyl phosphonate,
diphenyl 2-(2-tert-butyl-4-methylphenoxycarbonyl)ethyl phosphonate,
diphenyl 2-(2-tert-butyl-5-methylphenoxycarbonyl)ethyl phosphonate,
diphenyl 2-(2-tert-butyl-4,6-methylphenoxycarbonyl)ethyl phosphonate.

The novel phosphorus-containing compounds of the present invention are useful not only as deterioration-preventing agents for various organic substances, but also as color-improving agents.

The phosphorus-containing antioxidants of the present invention are particularly useful as stabilizers for polyolefin resins. The present inventors found that by blending polyolefin resins with phosphonate represented by the above-mentioned formula (I) and conventional phenol-type and/or sulfur-containing antioxidants, an unexpected superior effect can be obtained, polyolefin resin compositions being obtainable which are stable to deterioration by heat and oxidation as well as very stable to discoloration.

A stabilized polyolefin resin composition according to the present invention preferably contains a phosphonate of formula (I), a phenol-type antioxidant and a sulfur-containing antioxidant in amounts of 0.01 to 5 (preferably 0.1 to 2) parts by weight, 0.005 to 2 (preferably 0.01 to 0.5) parts by weight and 0 to 5 parts by weight, respectively, based on 100 parts by weight of polyolefin resin.

Any known phenol-type annd sulfur-containing antioxidants are useful in the compositions of the present invention, including those previously mentioned.

The inclusion of the sulfur-containing antioxidant is not always necessary when the prevention of discoloration is a primary object, but it is very useful when the prevention of deterioration is also sought. When said antioxidant is included, its content is suitably 0.01 to 5 parts by weight, preferably 0.1 to 2 parts by weight, based on 100 parts by weight of polyolefin resin.

The polyolefin resin composition of the present invention is obtainable by blending the components using conventional equipment and methods of mixing and blending polyolefin resins with stabilizers, pigments and fillers.

The polyolefin resin composition of the present invention may contain other additives according to its purpose and uses. Such additives include for example different antioxidants, UV absorbers, photo-stabilizers, metal sequestering agents, metal soaps, nucleating agents, lubricants, antistatic agents, flame retardants, pigments, and fillers. For example, the lightfastness of the composition can be improved by adding UV absorbers and photo-stabilizers such as 2-hydroxy-4-methoxybenzophenone, 2-hydroxy-4-n-octyloxybenzophenone, 2-(2-hydroxy-5-methyl-phenyl)benzotriazole, 2-(2-hydroxy-3-tert-butyl-5-methylphenyl)-5-chlorobenzotriazole, 2-(2-hydroxy-3,5-di-tert-butylphenyl)-5-chlorobenzotriazole, 2-(2-hydroxy-3,5-di-amylphenyl)benzotriazole, nickel salt of [2,2'-thiobis(4-tert-octylphenolate)] butylamine, 2,2,6,6-tetramethyl-4-piperidinyl benzoate, bis(2,2,6,6-tetramethyl-4-piperidinyl) sebacate, 2-(3,5-di-tert-butyl-4-hydroxybenzyl)-2-n-butylmalonic acid, bis(1,2,2,6,6-pentamethyl-4-piperidyl), 1-[2-{3-(3,5-di-tert-butyl-4-hydroxyphenyl)-propionyloxy}ethyl]-4-[3-(3,5-di-tert-butyl-4-hydroxyphenyl)-proprionyloxy]-2,2,6,6-tetramethylpiperidine, and polycondensation products of dimethyl succinate and 1-(2-hydroxyethyl)-4-hydroxy-2,2,6,6-tetramethylpiperidine.

As the polyolefin resin for the present invention, there may be used poly-α-olefins such as low-density polyethylene, medium- to high-density polyethylene, linear low-density polyethylene, polypropylene, and polybutene-1; poly-α-olefin copolymers such as propylene/ethylene random or block copolymer, ethylene/butene-1 random copolymer; poly-α-olefin/vinyl monomer copolymers such as maleic anhydride-modified polypropylene; and mixtures thereof. Polypropylene is particularly preferred.

The invention is further illustrated by the following Preparations and Examples, which are not however to be interpreted as limiting the invention.

Preparation 1

To a 300-ml four-necked flask equipped with a thermometer, a stirrer, a condenser and a dropping funnel were added 32.8 g (0.20 mole) of 2-tert-butyl-4-methylphenol, 22.3 g (0.22 mole) of triethylamine and 100 g of toluene, and after replacing air in the flask by nitrogen, 19.10 g (0.21 mole) of acryloyl chloride was added dropwise at a reaction temperature of 30°C over 1 hour. After completion of the dropwise addition, excess triethylamine was neutralized with hydrochloric acid, the reaction solution was washed with water, and toluene was then removed from the organic layer by evaporation under reduced pressure to obtain 43.0 g of a crude product (yield, 99%). This crude product was purified by distillation under reduced pressure to obtain a white and transparent 2-tert-butyl-4-methylphenyl acrylate.

Melting point 54°—56°C

Boiling point (120°—122°C/4 mmHg) 533.3 Pa

Preparation 2

2-tert-Butyl-5-methylphenyl acrylate was obtained by carrying out reaction under the same conditions as in Preparation 1 except that 2-tert-butyl-5-methylphenol was used as a starting material.

Boiling point (95°—98°C/1 mmHg) 133.3 Pa (oily product)

Preparation 3

2-tert-Butyl-4,6-methylphenyl acrylate was obtained by carrying out reaction under the same conditions as in Preparation 1 except that 2-tert-butyl-4,6-dimethylphenol was used as a starting material.

Melting point 53°—55°C (white crystals)

Boiling point (93°—95°C/1 mmHg) 133.3 Pa

Example 1

To a 200-ml four-necked flask equipped with a thermometer, a stirrer and a condenser were added 6.80 g (0.031 mole) of 2-tert-butyl-4-methylphenyl acrylate, 4.30 g (0.031 mole) of diethyl phosphonate and 50 g of chloroform. After replacing air in the flask by nitrogen, 0.16 g (0.0008 mole) of a 28 wt.% methanol solution of sodium methoxide was added, and the mixture was kept at 61°C for 8 hours. After completion of the reaction, the reaction solution was cooled to not more than 40°C, neutralized with dilute hydrochloric acid and washed with water, and chloroform was then removed from the organic layer by evaporation under reduced pressure. The residue was recrystallized from n-hexane to obtain 10.4 g of a white crystalline diethyl 2-tert-butyl-4-methylphenoxycarbonylethyl phosponate (yield, 90%).

Melting point 52°—54°C

Elementary analysis (as $C_{18}H_{29}O_5P$):

C: 60.80% (60.66%)
H: 8.10% ( 8.20%)
P: 8.59% ( 8.69%)

Values in the parenthesis are calculated.

Infrared absorption spectrum (liquid paraffin method; unit, $cm^{-1}$):

1745(νc=o), 1630 (νarom c=c), 1240(νc–o), 1190, out of plane
1150, 1018(νp–o), 805(δarom C–H)

Example 2

Reaction was carried out under the same condition Example 1 except that 2-tert-butyl-4-methylphenyl acrylate and diphenyl phosphonate were used as starting material. Thus, diphenyl 2-(2-tert-butyl-4-methylphenoxycarbonyl)ethyl phosphonate was obtained as a colorless, transparent and viscous substance.

Elementary analysis (as $C_{26}H_{29}PO_5$):

C: 69.05% (69.02%)
H: 6.52% ( 6.46%)
P: 6.60% ( 6.85%)

Values in the parenthesis are calculated.

Infrared absorption spectrum (liquid paraffin method; unit, $cm^{-1}$):

1740(νc=o), 1610(νarom c=c), 1230(νc—o), 1190, 1140, out of plane

1020(νp—o), 820(νarom C—H).

Example 3

To the same flask as used in Example 1 were added 6.80 g (0.031 mole) of 2-tert-butyl-5-methylphenyl acrylate, 7.26 g (0.031 mole) of diphenyl phosphonate and 50 g of chloroform. After replacing air in the flask by nitrogen, 0.10 g (0.0005 mole) of a 28 wt.% methanol solution of sodium methoxide was added, and the mixture was kept at 61°C for 10 hours. After completion of the reaction, the reaction solution was cooled to 40°C, neutralized with dilute hydrochloric acid and washed with water, and chloroform was then removed from the organic layer by evaporation under reduced pressure. Thus, 13.61 g of diphenyl 2-(2-tert-butyl-5-methyl-phenoxycarbonyl) ethyl phosphonate was obtained as a colorless, transparent and viscous substance (yield, 97%).

Elementary analysis (as $C_{26}H_{29}O_5P$):

C: 68.95% (69.02%)

H: 6.60% ( 6.46%)

P: 6.92% ( 6.85%)

Values in the parenthesis are calculated.

Infrared absorption spectrum (liquid paraffin method; unit, $cm^{-1}$):

1750(νc=o), 1620(νarom c=c), 1245(νc—o), 1180, 1140, out of plane

1020(νp—o), 795(δarom C—H).

Example 4

To the same flask as used in Example 1 were added 7.0 g (0.030 mole) of 2-tert-butyl-4,6-dimethylphenyl acrylate, 5.83 g (0.030 mole) of dibutyl phosphonate and 50 g of chloroform. After replacing air in the flask by nitrogen, 0.15 g (0.00078 mole) of a 28 wt.% methanol solution of sodium methoxide was added, and the mixture was kept at 61°C for 8 hours. After completion of the reaction, the reaction solution was cooled to not more than 40°C, neutralized with dilute hydrochloric acid and washed with water, and chloroform was then removed from the organic layer by evaporation under reduced pressure. The residue was recrystallized from n-hexane to obtain 11.0 g of dibutyl 2-(2-tert-butyl-4,6-dimethylphenoxycarbonyl)ethyl phosphonate as white crystal (yield, 86%).

Melting point 62°—63°C

Elementary analysis (as $C_{23}H_{39}O_5P$):

C: 64.85% (64.77%)

H: 9.16% ( 9.22%)

P: 7.10% ( 7.26%)

Values in the parenthesis are calculated.

Infrared absorption spectrum (liquid paraffin method; unit $cm^{-1}$):

1755(νc=o), 1620(νarom c—H), 1250(νc—o), 1150, out of plane

1030(νp—o), 840(δarom c—H).

Example 5

Each blend described below was well mixed in a mixer for 5 minutes and kneaded in a mixing roll at 180°C to obtain a composition. Each composition was formed into a sheet 1 mm thick on a hot press at 210°C to prepare a test piece 40 × 40 × 1 mm size. The test pieces were heat-deteriorated in a geer oven at 100°C for a definite period of time, and the degree of discoloration was judged by means of the yellow index value (△YI) of a color-difference meter. The results are shown in Table 1.

Blends:

| | Parts by weight |
|---|---|
| Unstabilized polypropylene resin | 100 |
| Calcium stearate | 0.1 |
| 2,6-Di-tert-butyl-p-cresol | 0.2 |
| Phosphorus-containing compound to be tested | 0.2 |

TABLE 1

| | Blend No. | Phosphorus-containing compound to be tested | ΔYI value | | |
|---|---|---|---|---|---|
| | | | 0 | 25 hours | 50 hours |
| | 1 | Compound in Example 1 | −2.6 | 1.3 | 4.2 |
| | 2 | Compound in Example 2 | −2.0 | 2.5 | 5.5 |
| | 3 | Compound in Example 3 | −1.8 | 2.7 | 5.9 |
| | 4 | Compound in Example 4 | −2.5 | 1.8 | 4.6 |
| Comparison | 5 | Trisnonylphenyl phosphite | −1.0 | 6.7 | 10.6 |
| | 6 | No addition | Control | 30.6 | 59.5 |

Example 6

The blends below were formed into test pieces as in Example 5. Each test piece was placed in a gear oven at 160°C, and the elapsed time until 30% of the area of the test piece showed brittleness was measured. The thermal stability and oxidation stability were evaluated with said time as induction period for heat embrittlement. Further, the degree of discoloration was judged by means of the yellow index value (ΔYI) of a color-difference meter.

The results are shown in Table 2.

Blends:

| | Parts by weight |
|---|---|
| Unstabilized polypropylene resin | 100 |
| Calcium stearate | 0.1 |
| Test compound | varying amount |

The symbols in Table 2 indicate the test compounds as follows:

1—1: Diethyl 2-(2-tert-butyl-4-methylphenoxycarbonyl)ethyl phosphonate
1—2: Diphenyl 2-(2-tert-butyl-4-methylphenoxycarbonyl)ethyl phosphonate
1—3: Diphenyl 2-(2-tert-butyl-5-methylphenoxycarbonyl)ethyl phosphonate
1—4: Dibutyl 2-(2-tert-butyl-4,6-dimethylphenoxycarbonyl)ethyl phosphonate
AO—1: Distearyl pentaerythritol diphosphite
AO—2: Tetrakis(2,4-di-tert-butylphenyl)-4,4′-biphenylene diphosphite
AO—3: Tetrakis[methylene-3-(3,5-di-tert-butyl-4-hydroxyphenyl)-propionate]methane
AO—4: Dilauryl thiodipropionate
AO—5: Pentaerythritol tetrakis (δ-dodecylthiopropionate)

TABLE 2

| Test compound | | Blend No. | | | | | | | | Comparison | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Phosphorus-containing compound | 1—1 | 0.2 | 0.2 | | | | | | | | | | | | | No addition |
| | 1—2 | | | 0.2 | 0.2 | | | | | | | | | | | |
| | 1—3 | | | | | 0.2 | 0.2 | | | | | | | | | |
| | 1—4 | | | | | | | 0.2 | 0.2 | | | | | | | |
| | AO—1 | | | | | | | | | | | 0.2 | 0.2 | | | |
| | AO—2 | | | | | | | | | | | | | 0.2 | 0.2 | |
| Phenyl-type compound | AO—3 | 0.05 | 0.05 | 0.05 | 0.05 | 0.05 | 0.05 | 0.05 | 0.05 | 0.05 | 0.05 | 0.05 | 0.05 | 0.05 | 0.05 | |
| Sulfur-containing compound | AO—4 | 0.2 | | 0.2 | | 0.2 | | 0.2 | | 0.2 | | 0.2 | | 0.2 | | |
| | AO—5 | | 0.2 | | 0.2 | | 0.2 | | 0.2 | | 0.2 | | 0.2 | | 0.2 | |
| Induction period for heat embrittlement (hr.) | | 630 | 600 | 615 | 590 | 610 | 590 | 625 | 605 | 450 | 400 | 470 | 415 | 480 | 420 | 5 |
| Degree of discoloration ΔYI value | Before ageing | −8.0 | −7.5 | −7.6 | −7.0 | −7.3 | −6.8 | −8.0 | −7.4 | 0.3 | 0.7 | −1.4 | −0.1 | −2.1 | −3.0 | Control |
| | 48 hours' ageing | −17.6 | −18.0 | −17.2 | −17.5 | −16.9 | −17.0 | −17.4 | −17.7 | −7.2 | −8.8 | −11.7 | −11.3 | −8.9 | −10.3 | — |
| | 96 hours' ageing | −14.4 | −15.2 | −14.0 | −14.3 | −13.7 | −14.1 | −14.3 | −14.9 | 1.2 | −2.8 | −5.2 | −6.4 | −1.3 | −4.0 | — |

Example 7

Polypropylene resin compositions were obtained in the same manner as in Example 6 except that test compounds as in Table 3 were used. Test pieces were prepared as before and the thermal stability, oxidation stability and degree of discoloration were similarly evaluated. The results are shown in Table 3.

TABLE 3

| Test compound | | Blend No. 1 | 2 | 3 | 4 | Comparison 5 | 6 | 7 | 8 |
|---|---|---|---|---|---|---|---|---|---|
| Phosphorus-containing compound | 1—1 | 0.2 | | | | | | | No addition |
| | 1—2 | | 0.2 | | | | | | |
| | 1—3 | | | 0.2 | | | | | |
| | 1—4 | | | | 0.2 | | | | |
| | AO—1 | | | | | | 0.2 | | |
| | AO—2 | | | | | | | 0.2 | |
| Phenol-type compound | AO—3 | 0.05 | 0.05 | 0.05 | 0.05 | 0.05 | 0.05 | 0.05 | |
| Induction period for heat embrittlement (hr.) | | 180 | 160 | 155 | 175 | 85 | 120 | 115 | 5 |
| Degree of discoloration ΔYI value | Before ageing | −11.2 | −10.2 | −9.7 | −10.9 | −1.3 | ×3.7 | −4.0 | Control |
| | 24 hours' ageing | −16.8 | −15.5 | −14.9 | −16.1 | −6.2 | −10.1 | −9.0 | — |
| | 72 hours' ageing | −13.7 | −12.6 | −12.3 | −12.2 | 14.2 | 7.3 | 8.6 | — |

**Claims**

1. A compound of the formula

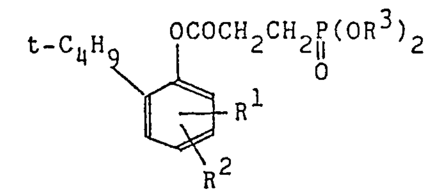

wherein $R^1$ and $R^2$ are selected from H and lower alkyl groups and $R^3$ is a lower alkyl or phenyl group.

2. A compound according to claim 1 selected from
dimethyl 2-(2-tert-butyl-4-methylphenoxycarbonyl)ethyl phosphonate,
dimethyl 2-(2-tert-butyl-5-methylphenoxycarbonyl)ethyl phosphonate,
dimethyl 2-(2-tert-butyl-4,6-dimethylphenoxycarbonyl)ethyl phosphonate,
diethyl 2-(2-tert-butyl-4-methylphenoxycarbonyl)ethyl phosphonate,
diethyl 2-(2-tert-butyl-5-methylphenoxycarbonyl)ethyl phosphonate,
diethyl 2-(2-tert-butyl-4,6-dimethylphenoxycarbonyl)ethyl phosphonate,
dipropyl 2-(2-tert-butyl-4-methylphenoxycarbonyl)ethyl phosphonate,
dipropyl 2-(2-tert-butyl-5-methylphenoxycarbonyl)ethyl phosphonate,
dipropyl 2-(2-tert-butyl-4,6-dimethylphenoxycarbonyl)ethyl phosphonate,
diisopropyl 2-(2-tert-butyl-4-methylphenoxycarbonyl)ethyl phosphonate,
diisopropyl 2-(2-tert-butyl-5-methylphenoxycarbonyl)ethyl phosphonate,
diisopropyl 2-(2-tert-butyl-4,6-dimethylphenoxycarbonyl)ethyl phosphonate,
dibutyl 2-(2-tert-butyl-4-methylphenoxycarbonyl)ethyl phosphonate,
dibutyl 2-(2-tert-butyl-5-methylphenoxycarbonyl)ethyl phosphonate,
dibutyl 2-(2-tert-butyl-4,6-dimethylphenoxycarbonyl)ethyl phosphonate,
diphenyl 2-(2-tert-butyl-4-methylphenoxycarbonyl)ethyl phosphonate,
diphenyl 2-(2-tert-butyl-5-methylphenoxycarbonyl)ethyl phosphonate and
diphenyl 2-(2-tert-butyl-4,6-dimethylphenoxycarbonyl)ethyl phosphonate.

3. A method for producing a compound according to claim 1 which comprises reacting a phenyl acrylate of the formula

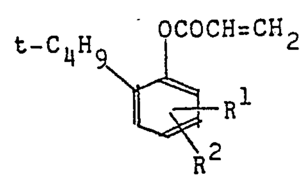

with a disubstituted phosphonate of the formula

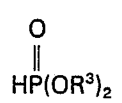

wherein $R^1$, $R^2$ and $R^3$ are as defined in claim 1.

4. A method according to claim 3 wherein the reaction is carried out in the presence of a basic catalyst, preferably sodium methoxide.

5. A method according to claim 3 or 4 wherein the amount of phenyl acrylate used is 0.9 to 1.1 mole per mole of disubstituted phosphonate.

6. A synthetic resin containing a compound according to claim 1 or 2 as a stabilizer.

7. A polyolefin resin composition stabilized by the incorporation of at least one compound according to claim 1 or 2, a phenol-type antioxidant, and optionally a sulfur-containing antioxidant.

8. A composition according to claim 7 containing from 0.01 to 5 (preferably 0.1 to 2) parts by weight of a compound according to claim 1 or 2, from 0.005 to 2 (preferably 0.01 to 0.5) parts by weight of a phenol-type antioxidant and 0 to 5 parts by weight of a sulfur-containing antioxidant per 100 parts by weight of the polyolefin resin which is preferably polypropylene.

9. A composition according to claim 8 containing from 0.01 to 5 (preferably 0.1 to 2) parts by weight of a sulfur-containing antioxidant per 100 parts by weight of the polyolefin resin.

10. A compound of the formula

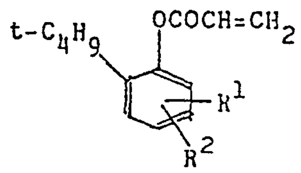

wherein $R^1$ and $R^2$ are selected from H and lower alkyl groups.

**Patentansprüche**

1. Verbindung der Formel

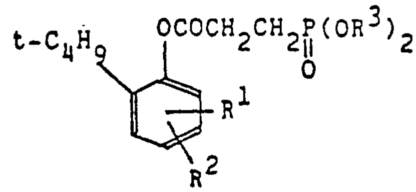

worin $R^1$ und $R^2$ H oder niedere Akylgruppen bedeuten und $R^3$ eine niedere Alkylgruppe oder Phenylgruppe ist.

2. Verbindung aus Anspruch 1, ausgewählt aus:
Dimethyl-2-(2-tert.-butyl-4-methylphenoxycarbonyl)ethylphosphonat,
Dimethyl-2-(2-tert.-butyl-5-methylphenoxycarbonyl)ethylphosphonat,
Dimethyl-2-(2-tert.-butyl-4,6-dimethylphenoxycarbonyl)ethylphosphonat,
Diethyl-2-(2-tert.-butyl-4-methylphenoxycarbonyl)ethylphosphonat,
Diethyl-2-(2-tert.-butyl-5-methylphenoxycarbonyl)ethylphosphonat,
Diethyl-2-(2-tert.-butyl-4,6-dimethylphenoxycarbonyl)ethylphosphonat,
Dipropyl-2-(2-tert.-butyl-4-methylphenoxycarbonyl)ethylphosphonat,
Dipropyl-2-(2-tert.-butyl-5-methylphenoxycarbonyl)ethylphosphonat,
Dipropyl-2-(2-tert.-butyl-4,6-dimethylphenoxycarbonyl)ethylphosphonat,
Diisopropyl-2-(2-tert.-butyl-4-methylphenoxycarbonyl)ethylphosphonat,
Diisopropyl-2-(2-tert.-butyl-5-methylphenoxycarbonyl)ethylphosphonat,
Diisopropyl-2-(2-tert.-butyl-4,6-dimethylphenoxycarbonyl)ethylphosphonat,
Dibutyl-2-(2-tert.-butyl-4-methylphenoxycarbonyl)ethylphosphonat,
Dibutyl-2-(2-tert.-butyl-5-methylphenoxycarbonyl)ethylphosphonat,
Dibutyl-2-(2-tert.-butyl-4,6-dimethylphenoxycarbonyl)ethylphosphonat,
Diphenyl-2-(2-tert.-butyl-4-methylphenoxycarbonyl)ethylphosphonat,
Diphenyl-2-(2-tert.-butyl-5-methylphenoxycarbonyl)ethylphosphonat und
Diphenyl-2-(2-tert.-butyl-4,6-dimethylphenoxycarbonyl)ethylphosphonat.

3. Verfahren zur Herstellung einer Verbindung nach Anspruch 1, dadurch gekennzeichnet, daß man ein Phenylacrylat der Formel

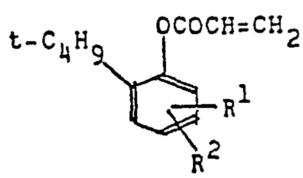

mit einem disubstituierten Phosphonat der Formel

O
||
$HP(OR^3)_2$

umsetzt, worin $R^1$, $R^2$ und $R^3$ die in Anspruch 1 angegebenen Bedeutungen besitzen.

4. Verfahren nach Anspruch 3, dadurch gekennzeichnet, daß die Umsetzung in Gegenwart eines basischen Katalysators, vorzugsweise Natriummethoxid, durchgeführt wird.

5. Verfahren nach Anspruch 3 oder 4, dadurch gekennzeichnet, daß die Menge an verwendetem Phenylacrylat 0,9 bis 1,1 Mol pro Mol disubstituiertem Phosphonat beträgt.

6. Synthetisches Harz, enthaltend eine Verbindung nach Anspruch 1 oder 2 als Stabilisator.

7. Polyolefinharzmasse, stabilisiert durch Einbringen von zumindest einer Verbindung nach Anspruch 1 oder 2, einem Antioxidants vom Phenoltyp und gegebenenfalls einem schwefelhaltigen Antioxidans.

8. Masse nach Anspruch 7, enthaltend 0,01 bis 5 (vorzugsweise 0,1 bis 2) Gewichtsteile einer Verbindung nach Anspruch 1 oder 2, 0,005 bis 2 (vorzugsweise 0,01 bis 0,5) Gewichtsteile eines Antioxidans vom Phenoltyp und 0 bis 5 Gewichtsteile eines schwefelhaltigen Antioxidans pro 100 Gewichtsteile des Polyolefinharzes, das vorzugsweise Polypropylen ist.

9. Masse nach Anspruch 8, enthaltend 0,01 bis 5 (vorzugsweise 0,1 bis 2) Gewichtsteile eines schwefelhaltigen Antioxidans pro 100 Gewichtsteile des Polyolefinharzes.

10. Verbindung der Formel

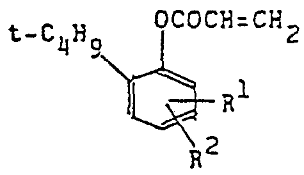

woring $R^1$ und $R^2$ Wasserstoff oder niedere Alkylgruppen bedeuten.

**Revendications**

1. Composé de formule

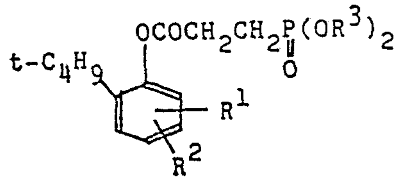

(I)

dans laquelle $R^1$ et $R^2$ sont choisis entre H et des groupes alkyle inférieurs et $R^3$ est un groupe alkyle inférieur ou phényle.

2. Composé suivant la revendication 1, choisi entre
le phosphonate de diméthyle et de 2-(2-tertiobutyl-4-méthylphénoxycarbonyl)éthyle,
le phosphonate de diméthyle et de 2-(2-tertiobutyl-5-méthylphénoxycarbonyl)éthyle,
le phosphonate de diméthyle et de 2-(2-tertiobutyl-4,6-diméthylphénoxycarbonyl)éthyle,
le phosphonate de diéthyle et de 2-(2-tertiobutyl-4-méthylphénoxycarbonyl)éthyle,
le phosphonate de diéthyle et de 2-(2-tertiobutyl-5-méthylphénoxycarbonyl)éthyle,
le phosphonate de diéthyle et de 2-(2-tertiobutyl-4,6-diméthylphénoxycarbonyl)ethyle,
le phosphonate de dipropyle et de 2-(2-tertiobutyl-4-méthylphénoxycarbonyl)éthyle,
le phosphonate de dipropyle et de 2-(2-tertiobutyl-5-méthylphénoxycarbonyl)éthyle,
le phosphonate de dipropyle et de 2-(2-tertiobutyl-4,6-diméthylphénoxycarbonyl)éthyle,
le phosphonate de diisopropyle et de 2-(2-tertiobutyl-4-méthylphénoxycarbonyl)éthyle,
le phosphonate de diisopropyle et de 2-(2-tertiobutyl-5-méthylphénoxycarbonyl)éthyle,
le phosphonate de diisopropyle et de 2-(2-tertiobutyl-4,6-diméthylphènoxycarbonyl)éthyle,
le phosphonate de dibutyle et de 2-(2-tertiobutyl-4-méthylphénoxycarbonyl)éthyle,
le phosphonate de dibutyle et de 2-(2-tertiobutyl-5-méthylphénoxycarbonyl)éthyle,
le phosphonate de dibutyle et de 2-(2-tertiobutyl-4,6-diméthylphénoxycarbonyl)éthyle,
le phosphonate de diphényle et de 2-(2-tertiobutyl-4-méthylphénoxycarbonyl)éthyle,
le phosphonate de diphényle et de 2-(2-tertiobutyl-5-méthylphénoxycarbonyl)éthyle, et
le phosphonate de diphényle et de 2-(2-tertiobutyl-4,6-diméthylphénoxycarbonyl)éthyle.

3. Procédé de production d'un composé suivant la revendication 1, qui consiste à faire réagir un acrylate de phényle de formule

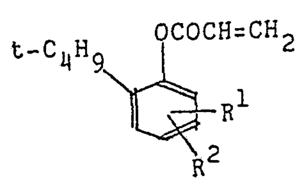

avec un phosphonate disubstitué de formule

O
||
$HP(OR^3)_2$

formules dans lesquelles $R^1$, $R^2$ et $R^3$ sont tels que définis dans la revendication 1.

4. Procédé suivant la revendication 3, dans lequel la réaction est conduite en présence d'un catalyseur basique, de préférence le méthylate de sodium.

5. Procédé suivant la revendication 3 ou 4, dans lequel la quantité d'acrylate de phényle umtilisée va de 0,9 à 1,1 mole par mole de phosphonate disubstitué.

6. Résine synthétique contenant un composé suivant la revendication 1 ou 2 comme agent stabilisant.

7. Composition de résine poly-oléfinique stabilisée par l'incorporation d'au moins un composé suivant la revendication 1 ou 2, d'un anti-oxydant de type phénolique et, facultativement, d'un anti-oxydant contenant du soufre.

8. Composition suivant la revendication 7, contenant 0,01 à 5 (de préférence 0,1 à 2) parties en poids d'un composé suivant la revendication 1 ou 2, 0,005 à 2 (de préférence 0,01 à 0,5) parties en poids d'un antioxydant de type phènolique et 0 à 5 parties en poids d'un anti-oxydant contenant du soufre pour 100 parties en poids de la résine poly-oléfinique qui est de préférence un polypropylène.

9. Composition suivant la revendication 8, contenant 0,01 à 5 (de préférence 0,1 à 2) parties en poids d'un anti-oxydant contenant du soufre pour 100 parties en poids de la résine poly-oléfinique.

10. Composé de formule

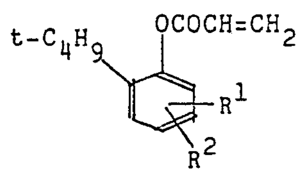

dans laquelle $R^1$ et $R^2$ sont choisis entre H et des groupes alkyle inférieurs.